# EUROPÄISCHE PATENTSCHRIFT

(11) **EP 2 501 023 B1**
(45) Veröffentlichungstag und Bekanntmachung des Hinweises auf die Patenterteilung: **27.01.2021**
(21) Anmeldenummer: 11158285.4
(22) Anmeldetag: 15.03.2011
(51) Int. Cl.: H02K 33/02, H02N 15/00, H02K 7/09

(54) **Vertikaler Stellantrieb mit Schwerkraftkompensation**
Vertical actuator with gravity compensation
actuateur vertical comprenant une compensation de gravité

(43) Veröffentlichungstag der Anmeldung: 19.09.2012
(73) Patentinhaber: ETEL S.A., 2112 Môtiers (CH)
(72) Erfinder: Cardon, Vincent, FR-21700 Arcenant (FR)
(74) Vertreter: Pleyer, Hans Anno

(56) Entgegenhaltungen:
- CN-Y- 201 215 934
- DE-A1- 1 447 343
- GB-A- 634 360
- US-A1- 2010 264 756

## Beschreibung

Die vorliegende Erfindung betrifft einen vertikalen Stellantrieb mit Schwerkraftkompensation. Solche Stellantriebe dienen beispielsweise dazu, einen Arbeitstisch oder eine Plattform in vertikaler Richtung möglichst genau zu positionieren.

In vielen Anwendungen wie etwa der Halbleiterfertigung müssen vertikal bewegliche Maschinenelemente entgegen der Schwerkraft gehalten und dabei exakt positioniert werden. Dabei ist der nötige Arbeitsbereich mit wenigen Millimetern oft relativ klein, die Anforderung an die Genauigkeit der Positionierung dafür aber umso höher. Es können Positioniergenauigkeiten im Bereich von Mikrometern und darunter gefordert sein.

Aus der EP 2034593 A2 ist ein vertikaler Stellantrieb bekannt, bei dem Reluktanzkräfte zwischen einer beweglichen und einer ortsfesten Baueinheit genutzt werden, um im Arbeitsbereich des Stellantriebs die Schwerkraft der beweglichen Baueinheit zu kompensieren, so dass die bewegliche Einheit bei Abschaltung oder Ausfall eines die vertikale Bewegung steuernden Linearmotors eine stabile Lage oberhalb des Arbeitsbereichs einnimmt.

Aus der WO 2009/093907 A1 sind Stellantriebe bekannt, die sich die Kombination einer mechanischen mit einer magnetischen Feder zunutze machen. Hierbei kann die Schwerkraft einer beweglichen Baueinheit durch die Federkräfte kompensiert werden, wobei sich die Federkonstanten der beiden Federn gegenseitig aufheben, und so im Arbeitsbereich des Stellantriebs ein kräftefreies Verschieben der beweglichen Baueinheit möglich ist. Hierdurch wird auch die Übertragung von Vibrationen zwischen ortsfester und beweglicher Baueinheit vermieden, was für eine exakte Positionierung von Vorteil ist. Die WO 2009/093907 A1 schlägt vor, die mechanische Feder als Blattfeder zu realisieren, wodurch für die bewegliche Baueinheit eine Führung in vertikaler Richtung gebildet Ist.

In der US 2010/0264756 A1 ist ein in mehreren Freiheitsgraden beweglich gehaltener Tisch offenbart, der mit Hilfe von magnetischen Abstoßungskräften in der Schwebe gehalten wird.

Die DE 14 47 343 A1 beschäftigt sich mit der magnetischen Lagerung einer Platte, die in vertikaler Richtung gehalten und drehbar um eine vertikale Achse gelagert werden soll.

Die GB 634360 A offenbart ein Nietwerkzeug, bei dem eine vertikale Achse mittels eines Elektromagneten in Schwingung versetzt wird, indem ein pulsierender Strom durch den Elektromagnet fließt. Das Joch dieses ortsfesten Elektromagneten liegt einem an der beweglichen vertikalen Achse befestigten zweiten Joch gegenüber. Die Joche weisen dabei sich gegenüberliegende, gegen der vertikalen Achse geneigte Flächen auf. Die vertikale Achse wird von einer Feder getragen.

Es ist Aufgabe der Erfindung, solche vertikalen Stellantriebe weiter zu verbessern. Dabei wird ein besonders einfacher Aufbau angestrebt.

Die Aufgabe wird gelöst durch einen vertikalen Stellantrieb gemäß Anspruch 1. Details der Erfindung ergeben sich aus den abhängigen Ansprüchen.

Vertikaler Stellantrieb mit Schwerkraftkompensation, mit einer ersten Baueinheit und einer zweiten Baueinheit wobei eine der beiden Baueinheiten ortsfest und die andere der beiden Baueinheiten in vertikaler Richtung beweglich ist. Dabei weist die erste Baueinheit ein erstes, konusförmiges Magnetjoch mit einer im konusförmigen Bereich angeordneten Spule, und die zweite Baueinheit ein zweites Magnetjoch mit wenigstens einem zur Spule hin horizontal ausgerichteten Magnet auf. Außerdem sind das erste und zweite Magnetjoch und die Spule rotationssymmetrisch bezüglich einer Mittenachse in vertikaler Richtung (Z), wobei der horizontale Abstand zwischen erstem und zweitem Magnetjoch im Bereich des wenigstens einen Magneten durch die konusförmige Ausbildung des ersten Magnetjochs in vertikaler Richtung (Z) variabel ist, so dass in einem Arbeitsbereich des Stellantriebs eine Reluktanzkraft (R) zwischen erster und zweiter Baueinheit wirkt, die der Gewichtskraft (G) der beweglichen der beiden Baueinheiten entgegenwirkt. Zusätzlich ist die bewegliche der beiden Baueinheiten über eine mechanische Feder mit einem ortsfesten Bereich verbunden, die eine Federkraft (F) auf die bewegliche der beiden Baueinheiten ausübt.

Weitere Vorteile sowie Einzelheiten der vorliegenden Erfindung ergeben sich aus der nachfolgenden Beschreibung bevorzugter Ausführungsformen anhand der Figuren. Dabei zeigt
- Figur 1: ein erstes Ausführungsbeispiel, bei dem die erste Baueinheit beweglich ist,
- Figur 2: ein zweites Ausführungsbeispiel, bei dem die erste Baueinheit ortsfest ist,
- Figur 3: ein drittes Ausführungsbeispiel als Abwandlung des ersten Ausführungsbeispiels.

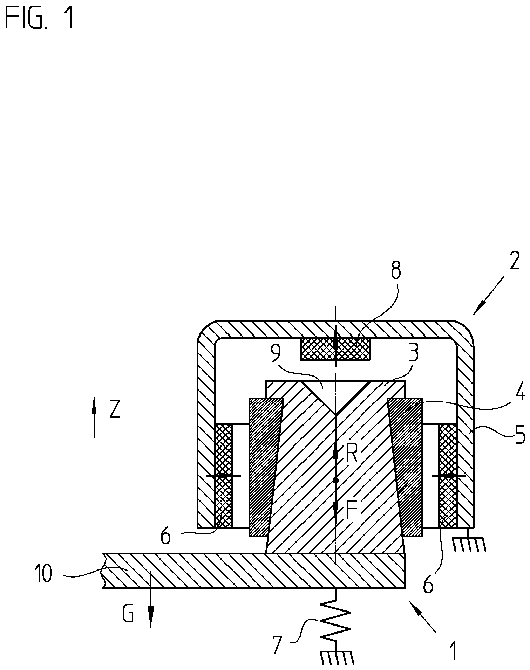

In der Figur 1 ist ein erstes Ausführungsbeispiel eines vertikalen Stellantriebs mit Schwerkraftkompensation gezeigt. Die erste Baueinheit 1 ist in diesem Ausführungsbeispiel beweglich und wird mittels des Stellantriebs gegenüber der ortsfesten Baueinheit 2 in eine gewünschte Position in der vertikalen Richtung Z gebracht.

Hierzu weist die erste Baueinheit 1 ein erstes Magnetjoch 3 auf, mit einem konusförmigen, sich in Z-Richtung verjüngenden Bereich. Das erste Magnetjoch 3 ist über einen Träger 10 mit der eigentlichen Nutzlast verbunden. Bei dieser Nutzlast kann es sich beispielsweise um einen Tisch handeln, auf dem ein Wafer zur Bearbeitung oder Untersuchung abgelegt ist. Hierbei ist es oft nötig, die Position des Wafers in der Z-Richtung genau einzustellen, etwa um die Oberfläche des Wafers in den Bereich eines Untersuchungsmikroskops zu bringen, in dem der Wafer scharf abgebildet wird. Ein solcher Tisch wird dabei unter Umständen von mehreren, beispielsweise drei Stellantrieben gehalten, wodurch sich zusätzliche Freiheitsgrade zur Verkippung des Wafers ergeben.

Im konusförmigen Bereich des ersten Magnetjochs 3 ist eine Spule 4 angeordnet, die eine vertikale, in Z-Richtung ausgerichtete Spulenachse aufweist und das erste Magnetjoch 3 gleichsam umwickelt.

Die zweite Baueinheit 2 ist ortsfest, also beispielsweise fest mit dem Fundament der Maschine verbunden. Sie weist ein zweites, hier becherförmiges Magnetjoch 5 auf, an dessen innerem Umfang und im Bereich der Spule 4 bzw. des konusförmigen ersten Magnetjochs 3 Magnete 6 angebracht sind. Die Magnetisierungsrichtung aller Magnete 6 liegt horizontal und zeigt dabei entweder zur vertikalen Symmetrieachse des zweiten Magnetjochs 5, oder von dieser weg. Durch eine symmetrische Anordnung der Magnete 6 relativ zum ersten Magnetjoch 3 heben sich die durch die Magnete 6 verursachten horizontalen Anziehungskräfte zwischen der ersten und zweiten Baueinheit 1, 2 auf.

Der horizontale Abstand zwischen dem ersten und zweiten Magnetjoch 3, 5 ändert sich durch die konusförmige Ausbildung des ersten Magnetjochs 3 in vertikaler Richtung Z. Es entsteht also ein in Z-Richtung variabler magnetischer Luftspalt zwischen erstem und zweitem Magnetjoch 3, 5. Es sei angemerkt, dass der magnetische Luftspalt tatsächlich nur durch den Abstand zwischen den beiden Magnetjochen 3, 5 bestimmt wird. Magnete 6 und Spule 4 ändern nichts am magnetischen Luftspalt, da ihre relative magnetische Permeabilität in etwa 1 beträgt.

Der variable magnetische Luftspalt im Bereich der Magnete 6 bewirkt nun eine Reluktanzkraft R, die die bewegliche Baueinheit 1 so verschieben möchte, dass der magnetische Luftspalt möglichst klein wird. Die Reluktanzkraft R wirkt also der Gewichtskraft G der beweglichen Baueinheit 1 und damit auch der Nutzlast entgegen. Durch die spezielle Form des magnetischen Luftspalts, der sich mit der Z-Richtung verändert, hängt auch die Reluktanzkraft R von der Z-Position der beweglichen Baueinheit 1 ab. Durch geeignete Maßnahmen, die weiter unten erläutert werden, lässt sich eine lineare Abhängigkeit der Reluktanzkraft R von der Z-Position der beweglichen Baueinheit 1 erreichen. Die Anordnung kann dann als magnetische Feder betrachtet werden.

Eine mechanische Feder 7 ist zusätzlich zwischen der beweglichen Baueinheit 1 und einem ortsfesten Bereich angeordnet. Die Federkonstante dieser mechanischen Feder 7 wirkt der Federkonstanten der magnetischen Feder entgegen, so dass sich die Federkonstanten der beiden Federn gegenseitig ganz oder zumindest zum Teil aufheben. Dann lässt sich die bewegliche Baueinheit kräftefrei bzw. gegen eine kleine, zur Auslenkung aus der Ruhelage proportionale Rückstellkraft verschieben. Letzteres hat den Vorteil, dass die bewegliche Baueinheit von selbst in eine Ruhelage zurückkehrt, wenn der vertikale Stellantrieb nicht betrieben wird. Außerdem ist nur ein kleiner Strom nötig, um den vertikalen Stellantrieb in einer beliebigen Position im Arbeitsbereich zu halten. Damit sind auch elektrische Verluste und der Wärmeeintrag klein, was insbesondere in Systemen von Vorteil ist, bei denen es auf eine sehr genaue Positionierung ankommt.

Vorzugsweise ist die Feder 7 in dieser Ruhelage entspannt, die Gewichtskraft G und die Reluktanzkraft R heben sich gerade auf. Die Feder 7 dient dann nur dazu, den Kraftaufwand zum Verschieben der beweglichen Baueinheit 1 zu reduzieren. Sind die Federkonstanten der mechanischen Feder 7 und der magnetischen Feder entgegengesetzt gleich, so wirkt beim Auslenken aus der Ruhelage keine resultierende Federkraft auf die bewegliche Baueinheit 1. Besteht jedoch ein kleiner betragsmäßiger Unterschied zwischen den Federkonstanten, so wird es eine im Vergleich zu den einzelnen Federkräften F, R kleine resultierende Rückstellkraft proportional zur Auslenkung geben. Letzteres hat den Vorteil, dass die bewegliche Baueinheit ohne Energiezufuhr von außen stets in die Ruhelage zurückkehrt. Völlige Kräftefreiheit optimiert dagegen die Schwingungsisolation zwischen den beiden Baueinheiten 1, 2.

Die Feder 7 ist hier als einfache Spiralfeder dargestellt. Verwendet man statt dessen eine Blattfederanordnung, so kann diese zusätzlich die Funktion einer Führung für die bewegliche Baueinheit 1 übernehmen. Es ist dank der weitgehenden Kompensation der Federsteifigkeit in vertikaler Richtung Z möglich, auch besonders dicke und damit steife Blattfedern zu verwenden, so dass alle Freiheitsgrade bis auf die vertikale Richtung Z blockiert sind.

Indem man in der Spule 4 einen Strom fließen lässt, entsteht im horizontalen Magnetfeld der Magnete 6 eine vertikale Lorentzkraft, deren Richtung von der Richtung des Stromes in der Spule abhängt. Mittels dieser Lorentzkraft kann also die bewegliche Baueinheit 1 aus seiner Ruhelage ausgelenkt und in eine gewünschte Position gebracht und dort gehalten werden. Mittels üblicher Positionssensorik lässt sich hierfür ein Regelkreis aufbauen, der die gewünschte Position sehr genau einstellt.

Die Figur 1 zeigt am zweiten Magnetjoch 5 noch einen mittig über dem ersten Magnetjoch 3 angeordneten Zusatzmagnet 8. Dieser bewirkt eine zusätzliche, gegen die Gewichtskraft G der beweglichen Baueinheit 1 gerichtete Reluktanzkraft. Damit die insgesamt wirkende Reluktanzkraft R möglichst linear von der Z-Position der beweglichen Baueinheit 1 abhängt, weist das erste Magnetjoch 3 an seiner dem Zusatzmagnet 8 zugewandten Oberseite eine konusförmige Ausnehmung 9 auf.

Um eine bewegliche Baueinheit 1 mit einer Gewichtskraft G von ca. 25 N (inklusive Nutzlast) allein durch die Reluktanzkraft R in der Ruhestellung zu halten, hat sich ein vertikaler Stellantrieb mit etwa folgenden Abmessungen bewährt. Der größte Durchmesser des konusförmige Bereichs beträgt 26 mm, der kleinste Durchmesser 21 mm. Bei einer vertikalen Höhe dieses Bereichs von etwa 14 mm ergibt sich eine Neigung der Konusfläche von ca. 10 Grad gegen die Vertikale. Der Innendurchmesser des zweiten Magnetjochs 5 beträgt 41 mm, dessen Außendurchmesser beträgt 45 mm. Als Magnete 6 kommen Nd-Fe-B Magnete mit einer Flussdichte von ca. 1.3 T zum Einsatz, die in Z-Richtung etwa 12 mm hoch sind. Sie sind auf der Höhe der Spule 4 am gesamten inneren Umfang angeordnet.

Die Ruhelage, bei der die Reluktanzkraft R die Gewichtskraft G kompensiert, liegt dann etwa mittig im Arbeitsbereich des Stellantriebs. Der Arbeitsbereich beträgt etwa +/- 2 mm. Es ergibt sich eine magnetische Federkonstante von ca. 10 N/mm, wodurch auch ein Anhaltspunkt für die Wahl der mechanischen Feder 7 gegeben ist.

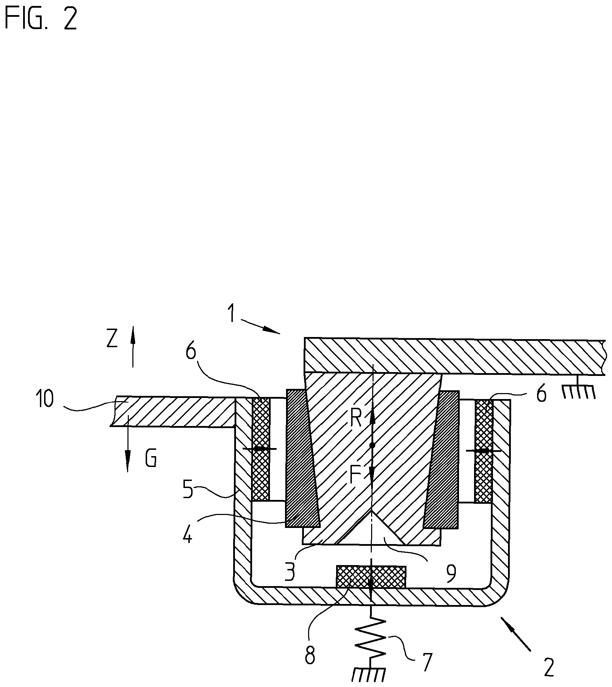

Die Figur 2 zeigt ein zweites Ausführungsbeispiel. Gleiche Bestandteile sind mit Bezugszeichen entsprechend dem ersten Ausführungsbeispiel benannt. Im zweiten Ausführungsbeispiel ist die erste Baueinheit 1 ortsfest und die zweite Baueinheit 2 beweglich. Der Träger 10 für die Nutzlast ist daher mit dem zweiten Magnetjoch 5 verbunden. Der konusförmige Bereich des ersten Magnetjochs 3 hat nun im Vergleich zum ersten Ausführungsbeispiel seinen größten Durchmesser oberhalb des kleinsten Durchmessers. So wirkt auch hier die Reluktanzkraft R zwischen erster und zweiter Baueinheit 1, 2 der Gewichtskraft G der beweglichen Baueinheit 2 entgegen. Die Funktionsweise des zweiten Ausführungsbeispiels entspricht ansonsten vollständig der des ersten Ausführungsbeispiels.

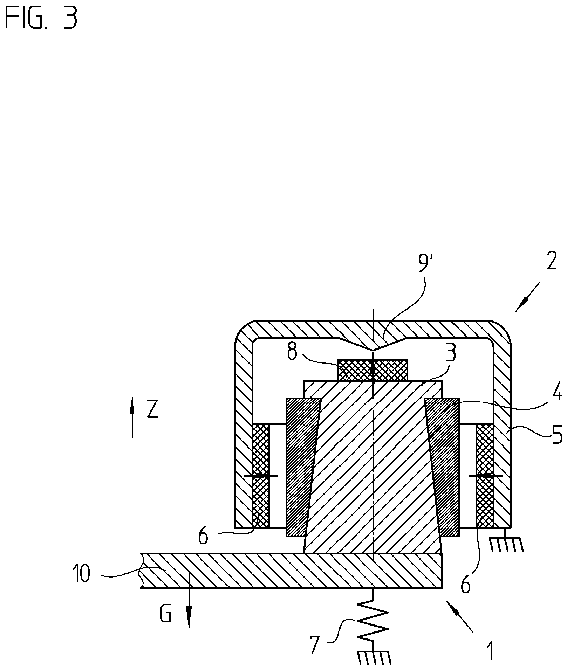

Das in der Figur 3 gezeigte dritte Ausführungsbeispiel zeigt im Vergleich zum ersten Ausführungsbeispiel aus Figur 1 eine kleine Abwandlung im Bereich des Zusatzmagneten 8. Dieser ist nun nicht am zweiten Magnetjoch 5 befestigt, sondern am ersten Magnetjoch 3. Um auch hier eine lineare Änderung der insgesamt wirkenden Reluktanzkraft R zu bewirken, ist am ersten Magnetjoch 3 eine konusförmige Erhebung 9' angebracht. Diese Anordnung von Zusatzmagnet 8 und konusförmiger Erhebung 9' bewirkt außerdem eine Zentrierung des ersten Magnetjochs 3 innerhalb des zweiten Magnetjochs 5, und erfüllt damit eine Doppelfunktion.

In allen Ausführungsbeispielen waren die ersten und zweiten Magnetjoche 3, 5 sowie die Anordnung der Magnete 6 und der Spule 4 rotationssymmetrisch bezüglich einer vertikalen Mittenachse. Hierdurch heben sich alle horizontalen Anziehungskräfte auf, eine Lagerung der beweglichen Baueinheit 1 muss somit keine großen horizontalen Kräfte aufnehmen. Die Magnetjoche bestehen aus einem weichmagnetischen Material wie beispielsweise Eisen, Ferritmaterial oder SMC (Soft Magnetic Composites). Die benötigten Magnetjoche lassen sich günstig als Drehteile fertigen.

Es sind aber auch andere Ausgestaltungen möglich. So können sich auch in einer Anordnung symmetrisch zu einer vertikalen Ebene alle horizontalen Anziehungskräfte aufheben. Verzichtet man etwa aus Platzgründen auf solche Symmetrien, muss ein Lager entsprechend dimensioniert werden, um die horizontalen Anziehungskräfte aufnehmen zu können.

## Patentansprüche

1. Vertikaler Stellantrieb mit Schwerkraftkompensation, mit einer ersten Baueinheit (1) und einer zweiten Baueinheit (2), wobei eine der beiden Baueinheiten (1, 2) ortsfest und die andere der beiden Baueinheiten (1, 2) in vertikaler Richtung (Z) beweglich ist, **dadurch gekennzeichnet, dass** die erste Baueinheit ein erstes, konusförmiges Magnetjoch (3) mit einer im konusförmigen Bereich angeordneten Spule (4), und die zweite Baueinheit (2) ein zweites Magnetjoch (5) mit wenigstens einem zur Spule (4) hin horizontal ausgerichteten Magnet (6) aufweist, wobei das erste und zweite Magnetjoch (3, 5) und die Spule (4) rotationssymmetrisch bezüglich einer Mittenachse in vertikaler Richtung (Z) sind, und wobei ein horizontaler Abstand zwischen erstem und zweitem Magnetjoch (3, 5) im Bereich des wenigstens einen Magneten (6) durch die konusförmige Ausbildung des ersten Magnetjochs (3) in vertikaler Richtung (Z) variabel ist, so dass in einem Arbeitsbereich des Stellantriebs eine Reluktanzkraft (R) zwischen erster und zweiter Baueinheit (1, 2) wirkt, die der Gewichtskraft (G) der beweglichen der beiden Baueinheiten (1, 2) entgegenwirkt, und dass die bewegliche der beiden Baueinheiten (1, 2) über eine mechanische Feder (7) mit einem ortsfesten Bereich verbunden ist, die eine Federkraft (F) auf die bewegliche der beiden Baueinheiten (1, 2) ausübt.

2. Vertikaler Stellantrieb nach Anspruch 1, **dadurch gekennzeichnet, dass** sich die an der beweglichen der beiden Baueinheiten (1, 2) angreifenden Kräfte Reluktanzkraft (R), Federkraft (F) und Gewichtskraft (G) in einer Ruhelage des vertikalen Stellantriebs gegenseitig aufheben.

3. Vertikaler Stellantrieb nach Anspruch 2, **dadurch gekennzeichnet, dass** die Feder (7) in der Ruhelage entspannt ist.

4. Vertikaler Stellantrieb nach einem der vorhergehenden Ansprüche, **dadurch gekennzeichnet, dass** die Federkraft (F) und die Reluktanzkraft (R) im Arbeitsbereich des Stellantriebs so gewählt sind, dass die bewegliche der beiden Baueinheiten (1, 2) kräftefrei verschoben werden kann, oder dass im Arbeitsbereich eine zur Ruhelage gerichtete Rückstellkraft proportional zur Auslenklung aus der Ruhelage wirkt, die betragsmäßig kleiner ist als die jeweils wirkende Federkraft (F) und Reluktanzkraft (R).

5. Vertikaler Stellantrieb nach einem der vorhergehenden Ansprüche, **dadurch gekennzeichnet, dass** die bewegliche der beiden Baueinheiten (1, 2) mittels eines durch die Spule (4) fließenden Stromes in vertikaler Richtung (Z) positionierbar ist.

6. Vertikaler Stellantrieb nach Anspruch 5, **dadurch gekennzeichnet, dass** der in der Spule (4) fließende Strom eine im Arbeitsbereich konstante, vertikale Kraft auf die bewegliche der beiden Baueinheiten (1, 2) bewirkt, deren Richtung von der Stromrichtung abhängt.

7. Vertikaler Stellantrieb nach einem Anspruch 6, **dadurch gekennzeichnet, dass** die Achse der wenigstens einen Spule (4) vertikal ausgerichtet ist und damit senkrecht auf die horizontale Magnetisierungsrichtung des wenigstens einen Magnets (6) steht, so dass eine vertikale Lorentzkraft auf die bewegliche der beiden Baueinheiten (1, 2) wirkt.

8. Vertikaler Stellantrieb nach einem der vorhergehenden Ansprüche, **dadurch gekennzeichnet, dass** wenigstens zwei Magnete (6) derart symmetrisch zum ersten Magnetjoch (3) angeordnet sind, dass sich die horizontalen Anziehungskräfte der Magnete (6) auf das erste Magnetjoch (3) gegenseitig aufheben.

## Claims

1. Vertical actuator with gravity compensation, with a first component (1) and a second component (2) wherein one of the two components (1, 2) is locally fixed in position and the other of the two components (1, 2) is movable in the vertical direction (Z), **characterized in that** the first component has a first conical magnetic yoke (3) with a coil (4) arranged in the conical region, and the second component (2) has a second magnetic yoke (5) with at least one magnet (6) oriented horizontally towards the coil wherein the first and second magnetic yokes (3, 5) and the coils (4) are furthermore rotationally symmetrical relative to a central axis in the vertical direction (Z), and wherein the horizontal distance between the first and second magnetic yokes (3, 5) in the region of the at least one magnet (6) is variable through the conical design of the first magnetic yoke (3) in the vertical direction (Z) so that in one working area of the actuator a reluctance force (R) acts between the first and second components (1, 2) and counteracts the gravity force (G) of the movable component of the two components (1, 2) and that the movable component of the two components (1, 2) is connected to a locally fixed region via a mechanical spring (7) which exerts a spring force (F) on the movable component of the two components (1, 2).

2. Vertical actuator according to Claim 1, **characterized in that** the forces engaging on the movable component of the two components (1, 2) cancel out the reluctance force (R), spring force (F) and gravity force (G) in a rest position of the vertical actuator.

3. Vertical actuator according to Claim 2, **characterized in that** the spring (7) is relaxed in the rest position.

4. Vertical actuator according to one of the preceding claims, **characterized in that** the spring force (F) and the reluctance force (R) in the working area of the actuator arc selected so that the movable component of the two components (1, 2) can be displaced free of forces, or that in the working area a resetting force acts which is directed towards the rest position and is proportional to the deflection from the rest position, and is smaller than the respectively acting spring force (F) and reluctance force (R).

5. Vertical actuator according to either of the preceding claims, **characterized in that** the movable component of the two components (1, 2) can be positioned in the vertical direction (Z) by means of a current flowing through the coil (4).

6. Vertical actuator according to Claim 5, **characterized in that** the current flowing in the coil (4) causes a vertical force, which is constant in the working area, on the movable component of the two components (1, 2) and whose direction depends on the flow direction.

7. Vertical actuator according to Claim 6, **characterized in that** the axis of the at least one coil (4) is oriented vertically and is thus perpendicular to the horizontal magnetizing direction of the at least one magnet (6) so that a vertical Lorentz force acts on the movable component of the two components (1, 2).

8. Vertical actuator according to one of the preceding claims, **characterized in that** at least two magnets (6) are arranged symmetrically relative to the first magnetic yoke (3) so that the horizontal attracting forces of the magnets (6) to the first magnetic yoke (3) cancel one another out.

## Revendications

1. Servomoteur vertical à compensation de gravité, comprenant une première unité modulaire (1) et une deuxième unité modulaire (2), l'une des deux unités modulaires (1, 2) étant stationnaire et l'autre des deux unités modulaires (1, 2) étant mobile dans la direction verticale (Z), **caractérisé en ce que** la première unité modulaire présente une première culasse d'aimant en forme de cône (3) avec une bobine (4) disposée dans la zone en forme de cône, et la deuxième unité modulaire (2) présente une deuxième culasse d'aimant (5) avec au moins un aimant (6) orienté horizontalement vers la bobine (4), la première et la deuxième culasse d'aimant (3, 5) et la bobine (4) étant symétriques en rotation par rapport à un axe médian dans la direction verticale (Z), et dans lequel une distance horizontale entre la première et la deuxième culasse d'aimant (3, 5) peut être modifiée dans la direction verticale (Z) dans la zone dudit au moins un aimant (6) par la réalisation en forme de cône de la première culasse d'aimant (3) de sorte que dans une zone de travail du servomoteur une force de réluctance (R) agit entre la première et la deuxième unité modulaire (1, 2) et contre le poids (G) de l'unité mobile des deux unités modulaires (1, 2), et l'unité mobile des deux unités modulaires (1, 2) est reliée à une zone stationnaire par un ressort mécanique (7) qui exerce une force de ressort (F) sur l'unité mobile des deux unités modulaires (1, 2).

2. Servomoteur vertical selon la revendication 1, **caractérisé en ce que** les forces agissant sur l'unité mobile des deux unités modulaires (1, 2), à savoir la force de réluctance (R), la force de ressort (F) et le poids (G), s'annulent mutuellement dans une position de repos du servomoteur vertical.

3. Servomoteur vertical selon la revendication 2, **caractérisé en ce que** le ressort (7) est détendu dans la position de repos.

4. Servomoteur vertical selon l'une quelconque des revendications précédentes, **caractérisé en ce que** la force de ressort (F) et la force de réluctance (R) dans la zone de travail du servomoteur sont sélectionnées de telle sorte que l'unité mobile des deux unités modulaires (1, 2) peut être déplacée sans force, ou **en ce que** dans la zone de travail, une force de rappel orientée vers la position de repos agit proportionnellement à l'excursion à partir de la positon de repos dont la valeur est inférieure à la force de ressort (F) et à la force de réluctance (R) agissant respectivement.

5. Servomoteur vertical selon l'une quelconque des revendications précédentes, **caractérisé en ce que** l'unité mobile des deux unités modulaires (1, 2) peut être positionnée dans la direction verticale (Z) au moyen d'un courant circulant à travers la bobine (4).

6. Servomoteur vertical selon la revendication 5, **caractérisé en ce que** le courant circulant dans la bobine (4) provoque une force verticale constante dans la zone de travail sur l'unité mobile des deux unités modulaires (1, 2) dont la direction dépend du sens du courant.

7. Servomoteur vertical selon la revendication 6, **caractérisé en ce que** l'axe de ladite au moins une bobine (4) est orienté verticalement et est donc perpendiculaire à la direction d'aimantation horizontale dudit au moins un aimant (6) de sorte qu'une force de Lorentz verticale agit sur l'unité mobile des deux unités modulaires (1, 2).

8. Servomoteur vertical selon l'une quelconque des revendications précédentes, **caractérisé en ce qu'**au moins deux aimants (6) sont disposés de manière symétrique à la première culasse d'aimant (3) de telle sorte que les forces d'attraction horizontales des aimants (6) sur la première culasse d'aimant (3) s'annulent mutuellement.
